# EUROPEAN PATENT APPLICATION

(11) **EP 2 094 053 A1**
(43) Date of publication of application: **26.08.2009**
(21) Application number: 09002538.8
(22) Date of filing: 23.02.2009
(51) Int. Cl.: H04W 74/08, H04W 36/08

(54) **Method and apparatus for improving random access procedure for handover**

(30) Priority: 25.02.2008 US 31016 P
(71) Applicant: Innovative Sonic Limited, Tortola (VG)
(72) Inventor: Kuo, Richard, Lee-Chree, Peitou Taipei City (TW)
(74) Representative: Weber, Joachim

(57) **Abstract**

A method of improving a random access procedure for handover in a user equipment (UE) of a wireless communication system is disclosed. The method includes steps of initiating a random access procedure for handover when performing a handover procedure (402), and repeating a random access preamble transmission when no valid random access response is received within a certain period of time or when contention of the random access procedure is considered not successful until the handover procedure succeeds or operation time of the handover procedure expires no matter whether a maximum number of the random access preamble transmission has been reached (404).

## Description

This application claims the benefit of U.S. Provisional Application No. 61/031,016, filed on Feb 25, 2008 and entitled "Method and Apparatus for Improving Random Access Procedure for Handover in a Wireless Communication System".

The present invention relates to a method and apparatus for improving a random access procedure for handover according to the pre-characterizing clauses of claims 1 and 2.

Long Term Evolution wireless communication system (LTE system), an advanced high-speed wireless communication system established upon the 3G mobile telecommunication system, supports only packet-switched transmission, and tends to implement both Medium Access Control (MAC) layer and Radio Link Control (RLC) layer in one single communication site, such as in Node B (NB) alone rather than in NB and RNC (Radio Network Controller) respectively, so that the system structure becomes simple.

In LTE, when a UE performs a certain Radio Resource Control (RRC) procedure such as a handover procedure, for example, a random access procedure is initiated accordingly by the MAC layer to establish contact with NB. The random access procedure can be performed by contention-based or non-contention-based manner depending on whether a Random Access Channel (RACH) resource used by the UE is assigned by the network or randomly selected by the UE itself.

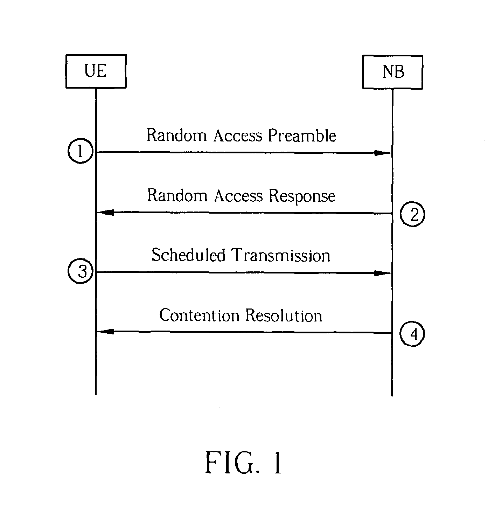

Please refer to FIG. 1, which is a schematic diagram of a contention-based random access procedure. As shown in FIG.1, the contention-based random access procedure mainly includes the following four steps: (1) Step "Random Access Preamble on RACH in uplink", (2) Step "Random Access Response on Downlink Share Channel (DL-SCH)", (3) Step "Scheduled Transmission on Uplink Share Channel (UL-SCH)", (4) Step "Contention Resolution on PDCCH or DL-SCH". In the prior art, if the UE cannot receive a valid response from NB in the Random Access Response Step or the Contention Resolution Step due to causes like low transmission power or contention failure, the UE shall repeat the Random Access Preamble Step, i.e. retransmit a Random Access Preamble to NB, until a valid response from the network is received or a failed condition of the random access procedure is reached, e.g., maximum number of the random access preamble transmission.

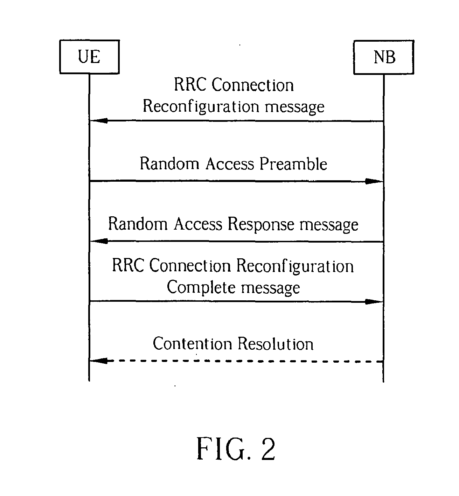

Please further refer to FIG.2, which is a schematic diagram of a contention-based random access procedure initiated by a handover procedure. As shown in FIG.2, when a handover procedure is performed according to a RRC Connection Reconfiguration message, the UE shall initiate a random access procedure for handover. If the UE uses a randomly selected Common Preamble, the initiated random access procedure is a contention-based random access procedure. In such a situation, the UE firstly transmits the random access preamble to a target NB. After the NB responds a Random Access Response message, the UE transmits a MAC Protocol Data Unit (PDU) containing a Cell Radio Network Temporary Identifier (C-RNTI) MAC Control Element and a RRC Connection Reconfiguration Complete message to the NB for requesting RRC connection. Since the MAC PDU carries the UE identity, the NB would send a Physical Downlink Control Channel (PDCCH) signaling addressed to the UE in the Contention Resolution Step if the RRC connection request for handover from the UE is accepted, such that the handover procedure can be considered successful by the UE.

On the other hand, if the initiated random access procedure is non-contention-based, the used RACH resource is assigned by the network, and the random access procedure is simplified into two steps: (1) Step "Random Access Preamble on RACH in uplink", (2) Step "Random Access Response on DL-SCH. Once the UE receives a valid response from the NB, the random access procedure is considered successful. Similarly, if the UE cannot receive a valid response from the NB within a certain period of time due to causes like low transmission power or contention failure, the UE shall repeat the Random Access Preamble Step, i.e. retransmit a Random Access Preamble to the NB, until a valid response from the network is successfully received or a failed condition of the random access procedure is reached.

Besides, a timer T304 is introduced in the handover procedure, for defining the operation time of a random access procedure initiated by the handover procedure. Related operation is described in the following. When a handover command is received, the UE starts the timer T304; and when the handover procedure succeeds, the UE stops the timer T304. On the other hand, if the handover procedure cannot succeed when the timer T304 expires, the UE determines the handover procedure failure, so as to perform a connection re-establishment procedure for re-establishing RRC connection with the NB.

Thus, the handover procedure shall be performed until the procedure succeeds or the timer T304 expires. However, according to the current MAC specification, the random access procedure for handover ends when the maximum number of random access preamble transmission is reached. In such a situation, it is possible that the random access procedure may end due to the UE reaching the maximum number of random access preamble transmission before the timer T304 expires.

To put it simply, during the period between end of the random access procedure and expiry of the timer T304, there is no action specified for the UE to do, causing the UE being idle or at a loss.

This in mind, the present invention aims at providing a method and apparatus for improving a random access procedure for handover in a user equipment (UE) of a wireless communications system, so as to prevent the UE from being idle or being at a loss.

This is achieved by a method and apparatus of improving a random access procedure for handover in a user equipment (UE) of a wireless communication system according to the pre-characterizing clauses of claims 1 and 2. The dependent claims pertain to corresponding further developments and improvements.

As will be seen more clearly from the detailed description following below, the claimed method of improving a random access procedure for handover in a user equipment (UE) of a wireless communication system is disclosed. The method includes steps of initiating a random access procedure for handover when performing a handover procedure; and repeating a random access preamble transmission when no valid random access response is received within a certain period of time or when contention of the random access procedure is considered not successful until the handover procedure succeeds or operation time of the handover procedure expires no matter whether a maximum number of the random access preamble transmission has been reached.

In the following, the invention is further illustrated by way of example, taking reference to the accompanying drawings. Thereof
FIG.1 is a schematic diagram of a contention-based random access procedure.
FIG.2 is a schematic diagram of a contention-based random access procedure initiated by a handover procedure.
FIG.3 is a schematic diagram of a wireless communications system.
FIG.4 is a function block diagram of a wireless communications device.
FIG.5 is a diagram of program code of FIG.4.
FIG.6 is a flowchart of a process according to an embodiment of the present invention.

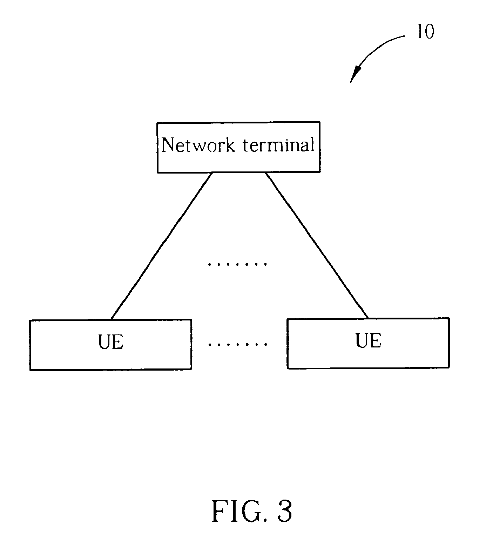

Please refer to FIG.3, which illustrates a schematic diagram of a wireless communication system 10. The wireless communication system 10 is preferably an LTE (long-term evolution) system, and is briefly composed of a network and a plurality of UEs. In FIG.3, the network and the UEs are simply utilized for illustrating the structure of the wireless communication system 10. Practically, the network may comprise a plurality of base stations (Node Bs), radio network controllers and so on according to actual demands, and the UEs can be devices such as mobile phones, computer systems, etc.

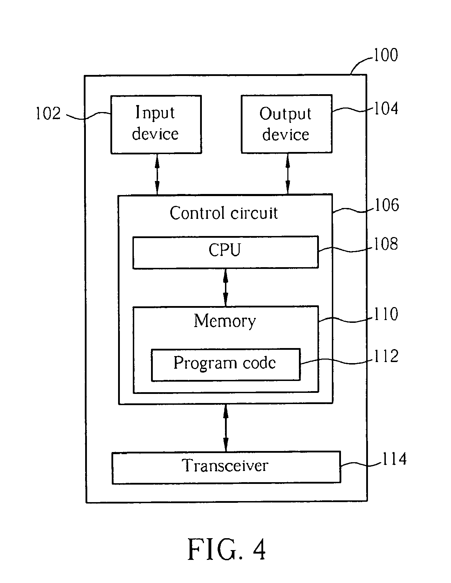

Please refer to FIG.4, which is a functional block diagram of a communication device 100 in a wireless communication system. For the sake of brevity, FIG.4 only shows an input device 102, an output device 104, a control circuit 106, a central processing unit (CPU) 108, a memory 110, a program code 112, and a transceiver 114 of the communication device 100. In the communication device 100, the control circuit 106 executes the program code 112 in the memory 110 through the CPU 108, thereby controlling an operation of the communication device 100. The communication device 100 can receive signals input by a user through the input device 102, such as a keyboard, and can output images and sounds through the output device 104, such as a monitor or speakers. The transceiver 114 is used to receive and transmit wireless signals, delivering received signals to the control circuit 106, and outputting signals generated by the control circuit 106 wirelessly. From a perspective of a communication protocol framework, the transceiver 114 can be seen as a portion of Layer 1, and the control circuit 106 can be utilized to realize functions of Layer 2 and Layer 3.

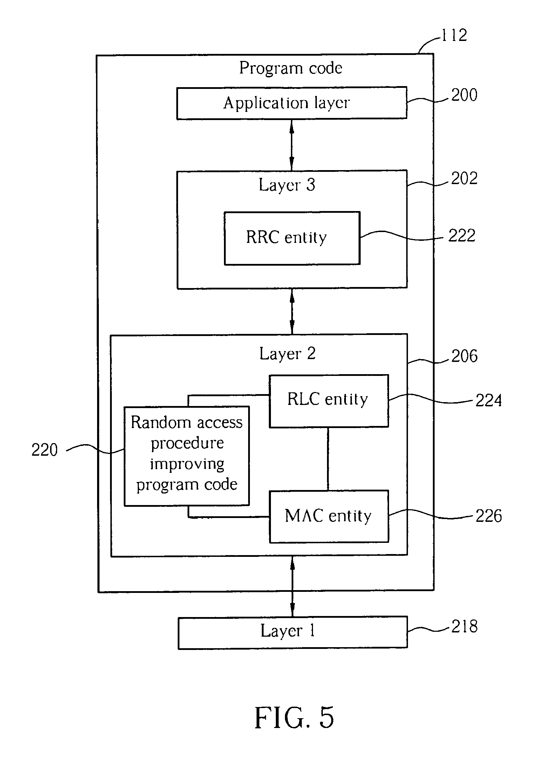

Please continue to refer to FIG.5. FIG.5 is a diagram of the program code 112 shown in FIG. 4. The program code 112 includes an application layer 200, a Layer 3 202, and a Layer 2 206, and is coupled to a Layer 1 218. The Layer 3 202 includes a radio resource control (RRC) entity 222 for exchanging RRC messages with other communications device, such as a NB or a radio access network, through RRC procedures and controlling the Layer 1218 and the Layer 2 206 with the RRC messages and information elements (IEs) thereof. The Layer 2 206 includes a radio link control (RLC) entity 224 that is capable of operating in an Acknowledged Mode (AM), a Unacknowledged Mode (UM) and a Transparent Mode (TM) for delivering packets from upper layers. A medium access control (MAC) entity 224 that is a lower entity of the RLC entity 224 is used for initiating a random access procedure for transmitting uplink configuration and information, such as a random access preamble, through a random access channel (RACH).

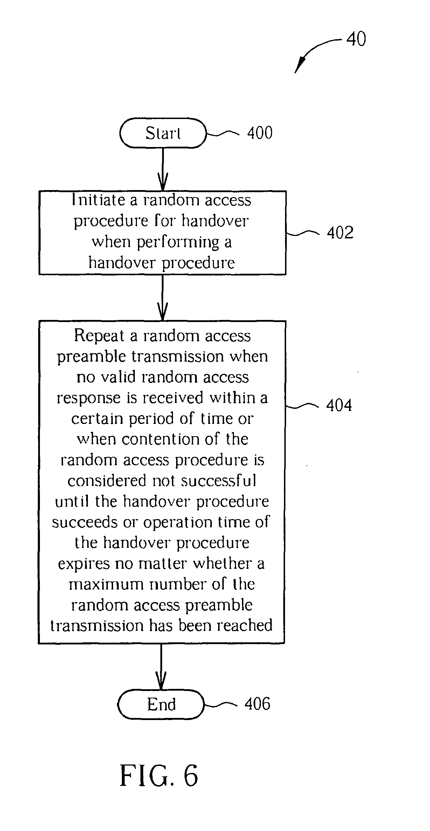

When a UE performs a handover procedure according to a RRC message such as a RRC Connection Reconfiguration message, a random access procedure for handover is initiated accordingly by the MAC entity 224. In such a situation, the embodiment of the present invention provides a random access procedure improving program code 220 to prevent the UE from being idle or at a loss. Please refer to FIG.6, which illustrates a schematic diagram of a process 40. The process 40 is utilized for improving a random access procedure for handover in a UE of the wireless communication system 10, and can be compiled into the random access procedure improving program code 220. The process 40 comprises the following steps:
- Step 400:: Start.
- Step 402:: Initiate a random access procedure for handover when performing a handover procedure.
- Step 404:: Repeat a random access preamble transmission when no valid random access response is received within a certain period of time or when contention of the random access procedure is considered not successful until the handover procedure succeeds or operation time of the handover procedure expires no matter whether a maximum number of the random access preamble transmission has been reached.
- Step 406:: End.

According to the process 40, after the UE initiates a random access procedure for handover, if no valid random access response is received within a certain period of time or when contention of the random access procedure is considered not successful, the UE repeat a random access preamble transmission until the handover procedure succeeds or operation time of the handover procedure expires.

In the embodiment of the present invention, there is no limitation to the number of the random access preamble transmission, and the operation time of the handover procedure is controlled by a timer T304. Thus, the UE can unceasingly repeat the random access preamble transmission until the handover procedure succeeds or the timer T304 expires. As a result, the embodiment of the present invention can prevent the UE from being idle or being at a loss between the time when the UE reaches the maximum number of the random access preamble transmission and expiry of the timer T304.

Certainly, in the embodiment of the present invention, steps like determining the handover procedure failure when the UE cannot complete the handover procedure when the timer T304 expires can also be included in the process 40. Related operation can be found in the section of the prior art, and not narrated again herein.

In summary, the method for improving the random access procedure initiated by the handover procedure is disclosed, such that the UE can unceasingly repeat the random access preamble transmission until the handover procedure succeeds or the timer T304 expires no matter whether the maximum number of the random access preamble transmission has been reached. As a result, the embodiment of the present invention can prevent the UE from being idle or at a loss.

## Claims

1. A method of improving a random access procedure for handover in a user equipment (UE) of a wireless communication system, the method comprising:
initiating a random access procedure for handover when performing a handover procedure (402); and
**characterized by** repeating a random access preamble transmission when no valid random access response is received within a certain period of time or when contention of the random access procedure is considered not successful until the handover procedure succeeds or operation time of the handover procedure expires no matter whether a maximum number of the random access preamble transmission has been reached (404).

2. A communication device (100) for improving a random access procedure for handover in a user equipment, named UE hereinafter, of a wireless communication system, the communication device (100) comprising:
a processor (108) for executing a program code (112); and
a memory (110) coupled to the processor (108) for storing the program code (112); wherein the program code (112) comprises:
initiating a random access procedure for handover when performing a handover procedure (402); and
**characterized by** repeating a random access preamble transmission when no valid random access response is received within a certain period of time or when contention of the random access procedure is considered not successful until the handover procedure succeeds or operation time of the handover procedure expires no matter whether a maximum number of the random access preamble transmission has been reached (404).

3. The method of claim 1 or the communication device (100) of claim 2, **characterized in that** the handover procedure is triggered by a Radio Resource Control, named RRC hereinafter, message.

4. The method of claim 3 or the communication device (100) of claim 3, **characterized in that** the RRC message is an RRC Connection Reconfiguration message.

5. The method of claim 1 or the communication device (100) of claim 2,
**characterized in that** the random access procedure is a non-contention-based random access procedure.

6. The method of claim 5 or the communication device (100) of claim 5, **characterized in that** the handover procedure succeeds when the UE receives a valid random access response.

7. The method of claim 1 or the communication device (100) of claim 2, **characterized in that** the random access procedure is a contention-based random access procedure.

8. The method of claim 7 or the communication device (100) of claim 7, **characterized in that** the handover procedure succeeds when the contention of the random access procedure is considered successful.

9. The method of claim 8 or the communication device (100) of claim 8, **characterized in that** the contention of the random access procedure is considered successful when receiving a Physical Downlink Control Channel, named PDCCH hereinafter, transmission addressed to the UE.

10. The method of claim 1 or the communication device (100) of claim 2, **characterized in that** the operation time of the handover procedure is controlled by a timer T304.

11. The method of claim 1 or the program code (112) of the communication device (100) of claim 2 further comprising:
determining the handover procedure failure when the operation time of the handover procedure expires.
